(19) **Europäisches Patentamt / European Patent Office / Office européen des brevets**

(11) **EP 1 435 009 B1**

(12) **EUROPÄISCHE PATENTSCHRIFT**

(45) Veröffentlichungstag und Bekanntmachung des Hinweises auf die Patenterteilung:
**21.03.2007 Patentblatt 2007/12**

(21) Anmeldenummer: **02760022.0**

(22) Anmeldetag: **20.09.2002**

(51) Int Cl.:
*G02B 5/18* (2006.01) *G02B 6/34* (2006.01)
*G01N 21/64* (2006.01)

(86) Internationale Anmeldenummer:
**PCT/CH2002/000517**

(87) Internationale Veröffentlichungsnummer:
**WO 2003/032042 (17.04.2003 Gazette 2003/16)**

(54) **LICHTKOPPELELEMENT**

LIGHT COUPLING ELEMENT

ELEMENT DE COUPLAGE LUMINEUX

(84) Benannte Vertragsstaaten:
**AT BE BG CH CY CZ DE DK EE ES FI FR GB GR IE IT LI LU MC NL PT SE SK TR**

(30) Priorität: **12.10.2001 CH 188701**

(43) Veröffentlichungstag der Anmeldung:
**07.07.2004 Patentblatt 2004/28**

(73) Patentinhaber: **OC Oerlikon Balzers AG 9496 Balzers (LI)**

(72) Erfinder:
- **WIKI, Max**
  **CH-8032 Zürick (CH)**
- **MAISENHÖLDER, Bernd**
  **CH-8006 Zürich (CH)**

(74) Vertreter: **Troesch Scheidegger Werner AG Schwäntenmos 14 8126 Zumikon (CH)**

(56) Entgegenhaltungen:
| | |
|---|---|
| EP-A- 0 509 342 | EP-A- 1 040 874 |
| EP-A- 1 096 274 | WO-A-01/02839 |
| WO-A-96/04123 | DE-A- 2 050 652 |
| US-A- 3 354 022 | US-A- 5 694 247 |
| US-A- 5 755 501 | US-A- 6 031 951 |

- GRANN E B ET AL: "ARTIFICIAL UNIAXIAL AND BIAXIAL DIELECTRICS WITH USE OF TWO-DIMENSIONAL SUBWAVELENGTH BINARY GRATINGS" JOURNAL OF THE OPTICAL SOCIETY OF AMERICA - A, OPTICAL SOCIETY OF AMERICA, WASHINGTON, US, Bd. 11, Nr. 10, 1. Oktober 1994 (1994-10-01), Seiten 2695-2703, XP002070085 ISSN: 0740-3232

## Beschreibung

Die vorliegende Erfindung betrifft ein Lichtkoppelelement mit einer Oberfläche aus einem Material, welches für Licht einer gegebenen Wellenlänge transparent ist, wobei in mindestens einem Bereich der Oberfläche ein Liniengitter vorhanden ist mit äquidistant parallelen, linienförmigen Einformungen oder mit äquidistant parallelen, linienförmigen Ausformungen.

Die vorliegende Erfindung geht dabei primär von Erkenntnissen aus, die sich an Lichtkoppelelementen der genannten Art zum Nachweis chemischer oder biochemischer Reaktionen anhand von Fluoreszenz ergeben haben. Diesbezüglich wird insbesondere auf die WO 01/02839 verwiesen, worin im Rahmen einer Analyseplattform ein derartiges Lichtkoppelelement beschrieben ist. Es wird ein Effekt, bekannt als "abnormale Reflexion" ausgenützt. Dabei wird ein mit einer Schicht versehener Träger vorgesehen. Vorzugsweise ist dieser Träger und auch die Schicht für

Licht gegebener Wellenlänge $\lambda$ im UV- VIS oder NIR-Bereich (200 nm bis 2000nm) einer Lichtquelle vorzugsweise einer zumindest angenähert monochromatischen Lichtquelle, wie zum Beispiel eines Lasers oder einer LED transparent. Im Falle dielektrischer Materialien hat das Material der Schicht einen wesentlich höheren Brechungsindex als das Material des Trägers, betrachtet bei der gegebenen Wellenlänge. Die Oberfläche des Trägers, worauf die Schicht aufliegt, hat ein Liniengitter, dessen Struktur sich über die dünne Schicht an die Oberfläche der Schicht überträgt. Beim ausgenützten "abnormalen Reflexionseffekt" wird Licht der gegebenen Wellenlänge bei Einhalt eines bestimmten Einfallswinkels praktisch vollständig reflektiert und praktisch kein Licht entlang der Schicht bzw. durch die Schicht transmittiert. Bei geeigneter Wahl der Strukturparameter wird das evaneszente, d.h. quergedämpfte, elektromagnetische Feld in der unmittelbaren Umgebung der Schichtoberfläche besonders stark, wodurch Fluoreszenzmoleküle in diesem Bereich besonders effizient angeregt werden. Dies ermöglicht wesentlich kleinere Konzentrationen von mit sogenannten Fluoreszenz-Labels versehenen Substanzen an der Schichtoberfläche zu analysierender Proben zu detektieren, als dies mit bezüglich dieser Schrift vorbekannten Methoden möglich war.

Das vorhandene Liniengitter bzw. die an beiden Grenzflächen Trägersubstrat/Schicht und Schicht/Umgebungsatmosphäre vorhandenen, in Aufsicht deckend ausgerichteten Liniengitter sind dabei in dem Sinne gerichtet, als sich die linienförmigen Einformungen und dazwischen sich ergebenden Ausformungen wellenartig in einer Richtung ausdehnen. Das mit den Liniengittern versehene Lichtkoppelelement dehnt sich, als Struktur-Welle betrachtet, eindimensional senkrecht zu den linienförmigen Einformungen bzw. dazwischenliegenden Ausformungen aus. Diese Gerichtetheit berücksichtigend, wird gemäss der in dieser Schrift detailliert beschriebenen Vorgehensweise, Laserlicht der erwähnten, gegebenen Wellenlänge erst mittels eines Polarisators in eine bestimmte Richtung polarisiert, bevor die Plattform mit dem Lichtkoppelelement damit beaufschlagt wird.

Betrachtet man Lichtkoppelelemente für andere optische Analysemethoden oder zu nachrichtentechnischen Zwecken, also beispielsweise zum Ein- und Auskoppeln von Laserlicht in wellenleitende Schichten, so fällt auch dort auf, dass die vorgesehenen Liniengitter im genannten Sinne eindimensional gerichtet sind, d.h. die vorgesehenen linienförmigen Einformungen und dazwischen gebildeten Ausformungen breiten sich in einer Richtung entlang der Oberfläche aus. Aufgrund dieser Gerichtetheit werden grundsätzlich vektorielle Grössen des dem Lichtkoppelelement zugeführten Lichtes räumlich gewichtet und je nach ihrer Richtung unterschiedlich durch das Lichtkoppelelement beeinflusst. Typischerweise wird beim Vorgehen gemäss der genannten WO 01/02839 das beaufschlagende Licht in Abhängigkeit von seiner Polarisierungsrichtung am Lichtkoppelelement unterschiedlich beeinflusst.

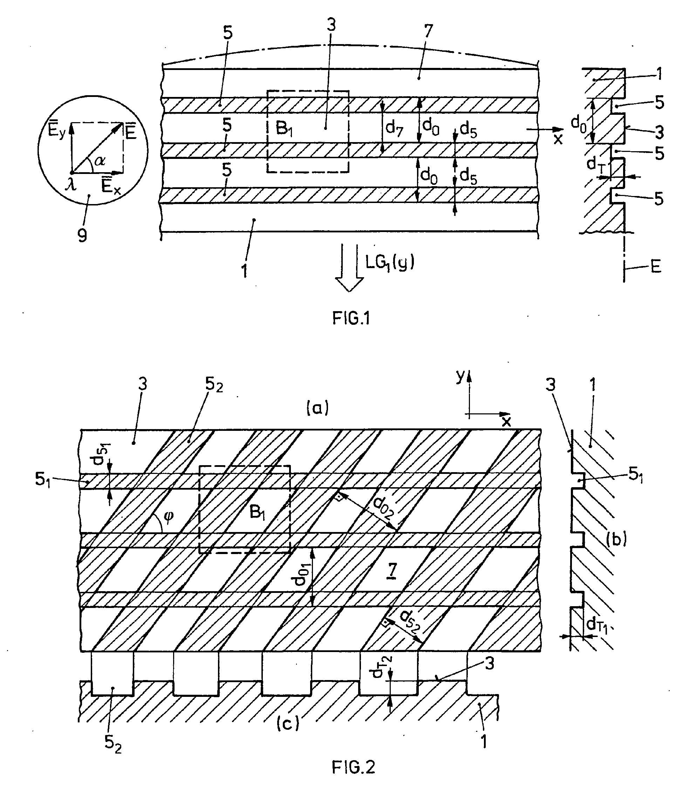

Die Veröffentlichung GRANN E B ET AL: "ARTIFICIAL UNIAXIAL AND BIAXIAL DIELECTRICS WITH USE OF TWO- DIMENSIONAL SUBWAVELENGTH BINARY GRATINGS" JOURNAL OF THE OPTICAL SOCIETY OF AMERICA - A, OPTICAL SOCIETY OF AMERICA, WASHINGTON, US, Bd. 11, Nr. 10, 1. Oktober 1994 (1994-10-01), Seiten 2695-2703, XP002070085 ISSN: 0740-3232 zeigt in Abb.2 ein Sub-Wellenlängengitter mit sich kreuzenden linienförmigen Ein- und Ausformungen.

Es ist Aufgabe der vorliegenden Erfindung, ein Lichtkoppelelement eingangs genannter Art zu schaffen, welches grundsätzlich auf vektorielle Grössen des beaufschlagenden Lichtes, wie insbesondere auf dessen Polarisierung, vermehrt unabhängig von der Vektorrichtung einwirkt.

Dies wird an einem Lichtkoppelelement obgenannter Art, welches in mindestens einem Bereich der Oberfläche äquidistant parallele, linienförmige Einformungen hat, dadurch erreicht, dass an der Oberfläche weitere äquidistant parallele, linienförmige Einformungen vorhanden sind, die die ersterwähnten kreuzen.

Alternativ wird dies an einem Lichtkoppelelement obgenannter Art, bei welchem in mindestens einem Bereich der Oberfläche äquidistant parallele, linienförmige Ausformungen vorhanden sind, dadurch erreicht, dass an der genannten Oberfläche weitere äquidistant parallele, linienförmige Ausformungen vorhanden sind, die die ersterwähnten Ausformungen kreuzen.

Die Periodizität der vorbekannten wie auch der erfindungsgemässen Gitter, d.h. der Folgeabstand der erwähnten Einformungen oder Ausformungen, ist in Funktion der gegebenen Wellenlänge des Lichtes, welches bei zweckentsprechendem Einsatz des Lichtkoppelelementes eingesetzt werden soll, ausgelegt.

Folgerichtig schlägt deshalb sowohl die WO 01/02839 wie auch die WO 00/75644 vor, dann, wenn das Lichtkoppelelement mit Licht von zwei Wellenlängen eingesetzt werden soll, dieses wohl mit parallelen Einformungen bzw. Ausformungen, aber nicht mit äquidistanten auszubilden, d.h. mit örtlich modulierter Gitterperiode oder mit sich kreuzenden Liniengittern, deren eines mit einer ersten Periode für Licht der einen Wellenlänge optimiert ist, und woran das zweite Liniengitter, optimiert für eine zweite Wellenlänge, mit einer von der ersten abweichenden Periode realisiert ist.

Weiterhin werden dabei aber vektorielle Grössen des Lichtes einer der erwähnten Wellenlängen am Lichtkoppelelement in Funktion der Vektorrichtung unterschiedlich gewichtet behandelt, wie insbesondere abhängig von dessen Polarisationsrichtung.

Beim erfindungsgemässen Lichtkoppelelement, bei welchem sich äquidistant parallele, linienförmige Einformungen kreuzen, entstehen, von den erwähnten Einformungen berandet, dazwischenliegende Ausformungsinseln. Analog ergeben sich beim Lichtkoppelelement obgenannter Art, bei welchem sich äquidistant parallele, linienförmige Ausformungen kreuzen, dazwischenliegende Einformungsinseln.

Im Zusammenhang mit dem Vorsehen von Erhebungsstrukturen kann im weiteren auf die EP 1 040 874 verwiesen werden. Darin wird nämlich vorgeschlagen, zur gezielten Beeinflussung der Benetzbarkeit von Oberflächen für die optische Analysetechnik, Oberflächenbereiche, die nicht benetzt werden sollen, mit Ausformungsstrukturen auszubilden, deren Höhe ein bestimmtes Minimalmass nicht unterschreitet, nämlich von 50 nm bis 10 $\mu$m, derart, dass mit solchen Strukturen versehene Bereiche im Zusammenhang mit der Oberflächenenergie des unstrukturierten Oberflächenmaterials, eine Benetzung verhindert und sich diese in nicht strukturierten Oberflächenbereichen konzentriert. Obwohl es sich bei den wie erwähnt strukturierten Bereichen gemäss der EP 1 040 874 gerade nicht um Lichtkoppelbereiche handelt - sollen doch Proben dort gerade nicht vorhanden sein - und die beschriebenen Erhebungsstrukturen keine Kriterien bezüglich optischer Wirkung erfüllen müssen, wird doch auch gemäss vorliegender Erfindung und wie noch zu beschreiben sein wird das mit der Oberflächenenergie von Oberflächenbereichen im Zusammenhang stehende Gebiet der Oberflächenbenetzbarkeit angesprochen werden.

Wie erwähnt sind aus der erwähnten EP 1 040 874 die Gesetzmässigkeiten bekannt, mit hydrophob strukturierten Oberflächen nicht zu benetzenden Bereiche an einer Oberfläche zu definieren und damit auch die zu benetzenden. Beim Vorgehen gemäss vorliegender Erfindung werden zusätzlich zur Lösung der eingangs genannten Aufgabe nun auch folgende Vorteile in diesem Zusammenhang erwirkt:

Die Oberflächenenergie einer Grenzfläche zu einer Flüssigkeit ist proportional zu der in einem definierten Aufsichtsbereich vorhandenen Oberfläche. Ist die Oberfläche im genannten Bereich plan, dann ist diese Oberfläche, als spezifische Oberfläche bezeichenbar, weit kleiner, als wenn im nämlichen Aufsichtsbereich die Oberfläche aufgeraut ist. Wird auf einem solchen Oberflächenbereich ein Flüssigkeitstropfen abgelegt, so dehnt er sich auf diesem Bereich so aus, dass ein Energieminimum erreicht wird. Pragmatisch heisst dies, dass sich ein Flüssigkeitstropfen auf dem genannten Bereich mit zunehmender spezifischer Oberfläche mehr und mehr zusammenzieht, bis hin zu dem gemäss der EP 1 040 874 ausgenützten Effekt, dass nämlich die Flüssigkeit vom betrachteten Bereich abtropft.

Es wird beim Lichtkoppelelement gemäss vorliegender Erfindung, im betrachteten Bereich, die spezifische Oberfläche, verglichen mit Vorsehen lediglich eines Liniengitters, vergrössert, aber nur soweit, dass sich wohl ein darauf abgelegter Tropfen zusammenzieht, nicht aber abtropft. Beim oben erwähnten, bevorzugten Einsatz des erfindungsgemässen Lichtkoppelelementes zur Erzeugung evaneszenter, d.h. quergedämpfter elektromagnetischer Felder im Rahmen einer Technik, wie sie beispielsweise aus der WP 01/02839 vorbekannt ist, ergibt sich dadurch eine erhöhte Konzentration einer aufgebrachten, mit Label versehenen Flüssigsubstanz auf der Oberfläche, was wiederum das resultierende auslesbare Fluoreszenzsignal erhöht und zudem den Vorteil mit sich bringt, dass im betrachteten Bereich eine Mehrzahl, ja Vielzahl, einzelner Flüssigtropfen abgelegt werden kann, ohne dass diese ineinander flössen.

In einer bevorzugten Ausführungsform des erfindungsgemässen Lichtkoppelelementes wird vorgeschlagen, Einformungen mit drei Tiefen-Niveaus vorzusehen.

Durch Tiefenstaffelung der Einformungen wird ein zusätzlicher Parameter geschaffen, die Grösse der genannten spezifischen Oberfläche zu variieren.

Dabei ist zu berücksichtigen, dass auch einspringende Seitenflächenpartien der erwähnten Einformungen die erwähnte spezifische Oberfläche mitbestimmen, und dass tiefere Einformungen die erwähnte spezifische Oberfläche mehr vergrössern als weniger tiefe Einformungen.

Bei einer weiteren bevorzugten Ausführungsform des erfindungsgemässen Lichtkoppelelementes sind die Einformungen im wesentlichen überall gleich tief.

Obwohl die erfindungsgemäss vorgesehenen äquidistant parallelen, linienförmigen Einformungen oder Ausformungen sich beispielsweise bogenförmig entlang des betrachteten Bereiches erstrecken können, wird in weitaus bevorzugter Ausführungsform des erfindungsgemässen Lichtkoppelelementes vorgeschlagen, die linienförmigen Einformungen bzw. Ausformungen linear vorzusehen.

Gemäss dem grundlegenden Aspekt der vorliegenden Erfindung können sich die erwähnten linienförmigen Einformungen bzw. Ausformungen durchaus schiefwinklig kreuzen, und trotzdem wird die eingangs gestellte Aufgabe gelöst. Licht einer gegebenen Wellenlänge wird an einem betrachteten Liniengitter, in Funktion u.a. der Gittertiefe, der Gitterperiode und innerhalb einer solchen Periode, des Duty Cycles von Einformungen und Ausformung beeinflusst.

Somit ist es durchaus möglich, vektorielle Grössen des betrachteten Lichtes, wie insbesondere dessen Polarisationsrichtungen, am erfindungsgemässen Lichtkoppelelement mindestens genähert gleich zu behandeln, wenn bei schiefwinklig sich kreuzenden, linienförmigen Einformungen bzw. Ausformungen diese Schiefwinkligkeit durch entsprechend unterschiedliche Auslegung der erwähnten Parameter, nämlich Gittertiefe, Gitterperiode und Duty Cycle, an den sich kreuzenden Mustern kompensiert wird. Auch so kann z.B. eine weitgehendst polarisationsrichtungsunabhängige Beeinflussung des Lichtes durch das Lichtkoppelelement erzielt werden. In einer weitaus bevorzugten Ausführungsform kreuzen sich die linienförmigen Einformungen bzw. die linienförmigen Ausformungen rechtwinklig. Weiter sind dann die Abstände der sich folgenden äquidistant parallelen linienförmigen Einformungen bzw. Ausformungen gleich. Bezogen auf die gegebene Wellenlänge $\lambda$, bevorzugt zwischen 20 nm und 2000 nm, werden (an Luft) bevorzugterweise folgende Dimensionierungsvorschriften befolgt:

Gitterperiode, definiert als Abstand sich folgender linienförmiger Einformungen bzw. Ausformungen:

$$0.1\lambda \leq d_0 \leq 10\lambda$$

bevorzugt:

$$0.2\lambda \leq d_0 \leq 2\lambda$$

besonders bevorzugt:

$$0.5\lambda \leq d_0 \leq 0.6\lambda$$

Gittertiefe, definiert als Tiefe zwischen linienförmigen Ausformungen bzw. von linienförmigen Einformungen:

$$0.001\lambda \leq d_T \leq 10\lambda$$

bevorzugt:

$$0.01\lambda \leq d_T \leq \lambda$$

besonders bevorzugt:

$$0.05\lambda \leq d_T \leq 0.2\lambda$$

Dabei ergeben sich folgende absolute Dimensionen:

Die Abstände der vorgesehenen linienförmigen Einformungen bzw. Ausformungen, $d_0$, betragen bevorzugterweise 20 nm bis 20000 nm, besonders bevorzugt 40 nm bis 4000 nm, insbesondere bevorzugt zwischen 100 nm und 1200 nm.

Die Tiefe $d_T$ der vorhandenen Einformungen beträgt dabei bevorzugterweise 0,2 nm bis 20000 nm, besonders bevorzugt zwischen 2 nm und 2000 nm, insbesondere zwischen 10 nm und 400 nm.

Als Duty Cycle, definiert als Verhältnis von Ausformungsbreite $d_7$ zu Abstand sich folgender linienförmiger Einformungen, wird bevorzugterweise ein Bereich von 0,2 bis 0,8, insbesondere bevorzugt von 0,4 bis 0,6 gewählt.

In einer weiteren bevorzugten Realisationsform des erfindungsgemässen Lichtkoppelelementes handelt es sich bei der erwähnten Oberfläche um diejenige einer Schicht, welche auf einem Trägers aufgebracht ist. Insbesondere mit Blick auf eine bevorzugte Anwendung des erfindungsgemässen Lichtkoppelelementes, nämlich im Rahmen von Fluoreszenzmarker-Messverfahren mittels evaneszenter, quergedämpfter elektromagnetischer Felder, insbesondere wie in der WO 00/75644 beschrieben, wird vorgeschlagen, dass die Oberfläche des Trägers im erwähnten Bereich die gleiche Einformungs/Ausformungs-Struktur hat wie die Oberfläche der Schicht und, in Aufsicht, die Strukturen aufeinander ausgerichtet sind.

Dabei hat das Material des Trägers einen Brechungsindex für das Licht der gegebenen Wellenlänge, der tiefer ist als der Brechungsindex des Schichtmaterials.

Die Schicht aus mindestens einem hochbrechenden Material besteht bevorzugterweise mindestens aus einem der Materialien $Ta_2O_5$, $TiO_2$, $NbO_5$, $ZrO_2$, ZnO oder $HfO_2$ und hat dabei bevorzugterweise eine Dicke, bezogen auf die gegebene Wellenlänge $\lambda$ an Luft von:

Schichtdicke:

$$0.01\lambda \leq d_s \leq 10\lambda$$

bevorzugt:

$$0.1\lambda \leq d_s \leq 2\lambda$$

besonders bevorzugt:

$$0.2\lambda \leq d_s \leq 0.3\lambda$$

Die absolute Dicke ist somit bevorzugterweise:

$$2 \text{ nm} \leq d_s \leq 20000$$

bevorzugt

$$20 \text{ nm} \leq d_s \leq 4000 \text{ nm}$$

besonders bevorzugt

$$40 \text{ nm} \leq d_s \leq 600 \text{ nm}.$$

Bei der Verwendung des Lichtkoppelelementes für biochemische Anwendungen kann eine vom hochbrechenden Material abweichende chemische Zusammensetzung an der Oberfläche von Vorteil sein. (Z.b. wenn eine auf der Struktur zu applizierende Chemie zur Haftung auf $SiO_2$ optimiert wurde, ist es möglich eine sehr dünne und damit optisch nicht oder nicht nachteilig wirksame $SiO_2$ Schicht auf die hochbrechende Schicht zu applizieren.) Dies kann erreicht werden, indem eine zusätzliche dünne Schicht bevorzugt der Dicke d mit $0.001\lambda \leq d \leq 0.2\lambda$, vorzugsweise $0.01\lambda \leq d \leq 0.05\lambda$ eines weiteren Materiales, bevorzugterweise von $SiO_2$, aufgebracht wird. Die absolute Dicke d dieser zusätzlichen Schicht beträgt dabei somit, bei bevorzugtem $\lambda$ zwischen 200 nm und 2000 nm, bevorzugt:

$$0,2 \text{ nm} \leq d \leq 400 \text{ nm}$$

vorzugsweise

$$2 \text{ nm} \leq d \leq 100 \text{ nm}.$$

Die Erfindung wird anschliessend beispielsweise anhand von Figuren erläutert. Diese zeigen:

Fig. 1      schematisch und in Aufsicht, ein Lichtkoppelelement bekannter Art mit eindimensionalem Liniengitter;

Fig. 2      in einer Darstellung analog zu derjenigen von Fig. 1, in Aufsicht und mit zwei Schnittdarstellungen, eine erste, bevorzugte Ausführungsform eines erfindungsgemässen Lichtkoppelelementes;

Fig. 3      in einer Aufsichtsdarstellung analog zu derjenigen von Fig. 2, eine weitere Ausführungsform eines erfindungsgemässen Lichtkoppelelementes;

Fig. 4(a) und 4(b)      Schematisch die Auswirkungen der Oberflächenstrukturierung für die Formung eines auf die Oberfläche aufgebrachten Flüssigkeitstropfens;

Fig. 5      anhand einer Aufsichtsdarstellung in Analogie zu den Fig. 2 bzw. 3, ein erfindungsgemässes Lichtkoppelelement mit Einformungen auf drei unterschiedlichen Einformungstiefen-Niveaus;

Fig. 6      eine bevorzugte Ausführungsform eines erfindungsgemässen Lichtkoppelelementes in schematisch-perspektivischer Darstellung und realisiert gemäss der Ausführungsform von Fig. 2, und

Fig. 7      in einer Darstellung analog zu derjenigen von Fig. 6, ein erfindungsgemässes Lichtkoppelelement, realisiert nach der Ausführungsform von Fig. 3.

In Fig. 1 ist, einerseits in Aufsicht, anderseits in einer Seitenansicht, ein Liniengitter vorbekannter Art dargestellt. In die Oberfläche 3 eines für Licht einer gegebenen Wellenlänge transparenten Materials, insbesondere für Laserlicht der Wellenlänge $\lambda = 633$nm, wie beispielsweise aus $Ta_2O_5$, ist ein Liniengitter eingearbeitet. Es besteht aus Einformungen 5, welche zueinander parallel sind, und es sind, soll es mit Licht einer einzigen Wellenlänge $\lambda$ beaufschlagt werden - vorzugsweise mit 200 nm $\leq \lambda \leq$ 2000 nm - die Einformungen 5 äquidistant in dem Sinne, dass ihre Abstände $d_o$ überall gleich sind, ebenso wie ihre Breite $d_5$, und damit die Breite $d_7$ der zwischen den Einformungen 5 verbleibenden Stege 7. Die Abstände $d_o$ definieren die Gitterperiode, wie sich ohne weiteres aus der Seitenansicht ergibt, mit dem Duty Cycle des Gitters definiert als Verhältnis der Ausformungsbreite $d_7$ zur Gitterperiode $d_o$.

Auch die Tiefe $d_T$ der Einformungen 5 ist üblicherweise überall gleich. Material der Oberfläche 3 und des Körpers 1, Gitterperiode $d_o$, Duty Cycle des Gitters und Gittertiefe $d_T$ werden dabei an die erwünschte Lichtwellenlänge $\lambda$ angepasst.

Das in Fig. 1 dargestellte, an sich bekannte Liniengitter kann ggf. auch, wie strichpunktiert dargestellt, gebogen sein. Es definiert eine Fortschreitensrichtung $LG_1$. Definiert man diese Richtung in der ursprünglichen, nicht mit den Einformungen 7 versehenen Oberflächenebene E mit y, und die Richtung quer dazu, wie dargestellt, mit x, so ist folgendes ersichtlich: Wie schematisch am Lichtbündel 9 dargestellt, werden die Komponenten $\bar{E}_x$ und $\bar{E}_y$ einer vektoriellen Grössen $\bar{E}$ des Lichtes, wie insbesondere dessen Polarisation, durch das Liniengitter unterschiedlich beeinflusst, d.h. die Wirkung des Liniengitters ist bezüglich solcher vektorieller Grössen des Lichtes von der Vektorrichtung $\alpha$ abhängig. Z.B. ist die Wirkung des Liniengitters nicht unabhängig von der Polarisationsrichtung des Lichtes im Lichtstrahl 9.

Wie bereits eingangs erläutert wurde, ist es vorbekannt, mit Liniengittern des in Fig. 1 dargestellten Typs Licht von zwei und mehr Wellenlängen $\lambda$ zu behandeln. Zu diesem Zweck wird dabei am Liniengitter die Gitterperiode $d_o$ nebst ggf. weiteren Grössen in der Fortschreitensrichtung $LG_1$ moduliert, d.h. örtlich variiert. Das nachfolgend zu beschreibende erfindungsgemässe Lichtkoppelelement ist jedoch jedenfalls für eine einzige Lichtwellenlänge $\lambda$ optimiert, womit örtlich modulierte Gitterperioden oder Liniengitter mit unterschiedlichen Perioden in einem betrachteten Bereich nicht vorgesehen sind.

In Fig. 2 ist eine erste prinzipielle Ausführungsvariante eines erfindungsgemässen Lichtkoppelelementes dargestellt. Dabei stellt Fig. 2(a) die Aufsicht dar, Fig. 2(b) eine Querschnittsdarstellung in einer Richtung und Fig. 2(c) eine Querschnittsdarstellung in dazu senkrechter Richtung. In der Oberfläche 3 des Körpers 1 sind äquidistant parallele, linienförmige, erste Einformungen $5_1$ eingearbeitet sowie diese unter dem Winkel $\varphi$ kreuzende, zweite äquidistant parallele, linienförmige Einformungen $5_2$. Die linienförmigen Einformungen $5_1$ und $5_2$ bilden ein im betrachteten Bereich durchgehendes Einformungsgitter in zwei Dimensionen x und y.

Die ersten linienförmigen Einformungen $5_1$ haben eine Breite $d_{51}$, die zweiten $5_2$ eine Breite $d_{52}$.

Die Abstände sich folgender erster linienförmiger Einformungen $5_1$ betragen $d_{o1}$, diejenigen sich folgender, linienförmiger zweiter Einformungen, $5_2$, $d_{o2}$. Diese Abstände definieren die entsprechenden ersten, $d_{o1}$, und zweiten, $d_{o2}$, Gitterperioden.

Durch die linienförmigen Einformungen $5_1$ und $5_2$ werden Ausformungsinseln 7 definiert.

Der erste Duty Cycle ist definiert durch das Verhältnis $(d_{o1} - d_{51})/d_{o1}$. Analog ist der zweite Duty Cycle definiert als $(d_{o2} - d_{52})/d_{o2}$.

Je nach Wahl des Winkels φ sowie Bemessung der jeweiligen Breiten $d_{5x}$ der linienförmigen Einformungen und deren Abstände $d_{ox}$ in Aufsicht gemäss der Darstellung von Fig. 2(a) ergeben sich für die verbleibenden Ausformungs-"Inseln" 7 rhomboidförmige, rombusförmige, rechteckige oder quadratische Formen.

Betrachtet man im Zusammenhang mit Fig. 2 das in Fig. 1 schematisch dargestellte Lichtbündel 9 der gegebenen Wellenlänge λ, so ist ersichtlich, dass mit dem erfindungsgemässen Lichtkoppelelement, gemäss Fig. 2, beide Vektorkomponenten $\bar{E}_x$ und $\bar{E}_y$ der vektoriellen Lichtgrösse $\bar{E}$, wie insbesondere deren Polarisation, gezielt beeinflusst werden. Bei Schiefwinkligkeit - φ ≠ 90° - der Lage der sich kreuzenden linienförmigen Einformungen $5_1$ und $5_2$ kann durch Wahl des Verhältnisses der Gitterperioden $d_{01}$ und $d_{02}$ und beispielsweise der jeweiligen Breiten der Einformungen $d_{51}$ und $d_{52}$ die Beeinflussung der Lichtvektorkomponenten entsprechend $\bar{E}_x$ und $\bar{E}_y$ durch das Lichtkoppelelement ebenfalls gezielt beeinflusst werden. Somit kann auch bei φ ≠ 90° mit entsprechender Abstimmung der erwähnten Parameter $d_{01}$, $d_{02}$, $d_{51}$, $d_{52}$ richtungsunabhängige Wirkung des erfindungsgemässen Lichtkoppelelementes auf vektorielle Lichtgrössen $\bar{E}$ erreicht werden.

Im weiteren ist ohne weiteres ersichtlich, dass die eingangs erwähnte, spezifische Oberfläche, beispielsweise an einem Bereich $B_1$ der Oberfläche 3 betrachtet, beim erfindungsgemässen Lichtkoppelelement wesentlich grösser ist als an einem Lichtkoppelelement bekannter Art, dessen Liniengitter, als Beispiel, in Fig. 1 dargestellt ist.

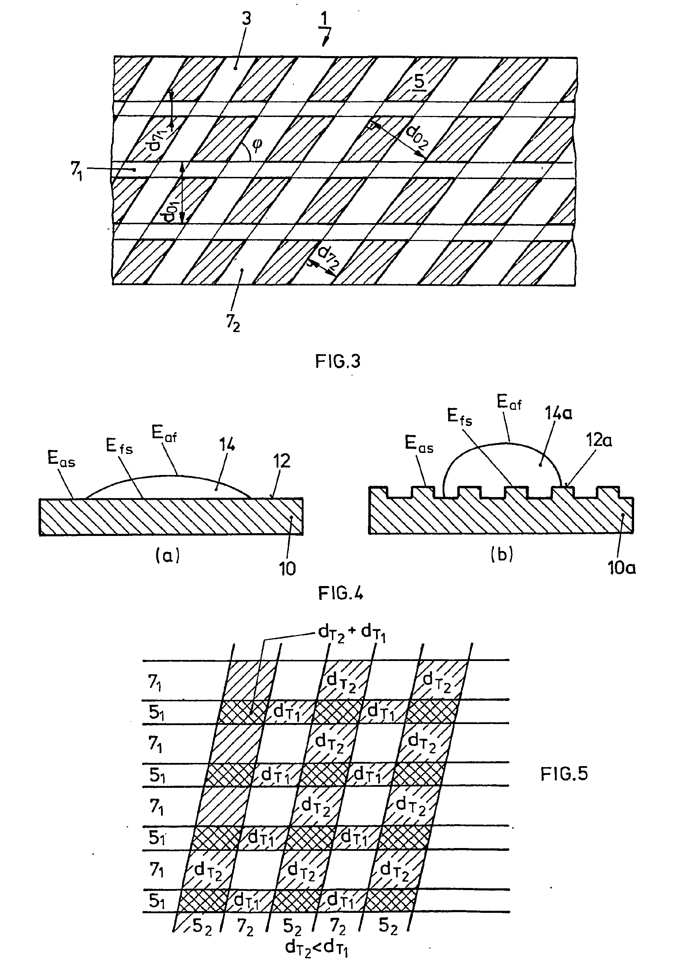

Bevor anhand von Fig. 4(a) und 4(b) diese Auswirkungen weiter diskutiert werden, soll anhand von Fig. 3, eine Darstellung analog zu Fig. 2(a), eine weitere Ausführungsform eines erfindungsgemässen Lichtkoppelelementes dargestellt werden. Bei dieser Ausführungsform sind in der Oberfläche 3 des Körpers 1 äquidistant parallele, erste linienförmige Ausformungen $7_1$ vorhanden, welche durch äquidistant parallele zweite linienförmige Ausformungen $7_2$ unter dem Winkel φ gekreuzt werden. Das so entstehende zweidimensionale Ausformungsgitter berandet bzw. definiert dazwischenliegende Einformungs-"Inseln" 5.

Es sind durch die Ausformungen $7_1$ bzw. $7_2$ Ausformungsbreiten $d_{71}$ und $d_{72}$ festgelegt sowie entsprechende Gitterperioden $d_{01}$ und $d_{02}$, beispielsweise entsprechend den Abständen benachbarter paralleler, linienförmiger Ausformungen $7_1$ bzw. $7_2$. Hier sind die Duty Cycles definiert durch die Verhältnisse $d_{71}/d_{01}$, bzw. $d_{72}/d_{02}$.

Bezüglich der Einwirkung des in Fig. 3 dargestellten erfindungsgemässen Lichtkoppelelementes auf vektorielle Lichtgrössen gilt das bereits im Zusammenhang mit Fig. 2 erläuterte, ebenso, was die mit dem erfindungsgemässen Lichtkoppelelement erwirkte Vergrösserung des spezifischen Oberfläche anbelangt.

Die Auswirkungen einer vergrösserten spezifischen Oberfläche auf eine Tropfenbildung sind in Fig. 4 schematisch dargestellt. In Fig. 4(a) ist schematisch ein Körper 10 mit planer Oberfläche 12 dargestellt. Auf der Oberfläche liegt ein Flüssigkeitstropfen 14. In Fig. 4(b) ist ein Körper 10a dargestellt, mit durch Strukturierung vergrösserter spezifischer Oberfläche $12_a$. Wiederum ist ein Flüssigkeitstropfen 14a auf der Oberfläche aufgebracht. Es bezeichnen weiter in beiden Darstellungen $E_{as}$ die Oberflächenenergie zwischen Umgebungsatmosphäre und Oberfläche der Körper 10 bzw. 10a, $E_{fs}$ die Oberflächenenergien an den Grenzflächen zwischen Flüssigkeit der Tropfen 14 bzw. 14a und den Körpern 10 bzw. 10a und schliesslich $E_{fa}$ die Oberflächenenergie an den Grenzflächen zwischen Flüssigkeit der Tropfen 14 bzw. 14a und Umgebungsatmosphäre. Grundsätzlich dehnt sich ein Flüssigkeitstropfen so weit aus, dass die Summe dieser Oberflächenenergien ein Minimum wird. Weil aufgrund der grösseren spezifischen Oberfläche 12a die Oberflächenenergie $E_{fs}$ an der strukturierten Fläche 12a grösser ist als im Falle der planen Oberfläche 12, zieht sich der Tropfen 14a zum Erreichen des erwähnten Energieminimums lateral mehr zusammen als im links dargestellten Fall planer Oberfläche 12.

Dieser Effekt wird auch beim Übergang eines vorbekannten Liniengitters bzw. Lichtkoppelelementes nach Fig. 1 zu einem erfindungsgemässen gemäss Fig. 2 oder Fig. 3 erzielt: An den gemäss Fig. 2 oder Fig. 3 strukturierten Oberflächen zieht sich ein aufgebrachter Flüssigkeitstropfen mehr zusammen, so dass es insbesondere für optische Analysen von Flüssigproben möglich wird, auf der nach Fig. 2 oder Fig. 3 strukturierten Oberfläche Probentropfen aufzubringen, die sich aufgrund des dargestellten Effektes von benachbarten "abkapseln", was auch ermöglicht, eine wesentlich erhöhte Zahl von Einzeltropfen auf einer gegebenen Ausdehnung der erfindungsgemäss strukturierten Oberfläche aufzubringen als beispielsweise auf einer gemäss Fig. 1 strukturierten, was beispielsweise für die automatisierte, schnelle optische Analyse einer Vielzahl von Proben von hoher Wichtigkeit ist. Die Gefahr, dass einzelne Probentropfen ineinander laufen, ist trotz ihrer engen Applikation, auf der nach Fig. 2 oder Fig. 3 strukturierten Oberfläche in zwei Dimensionen verteilt, wesentlich reduziert.

In einer ersten, bevorzugten Ausführungsform der erfindungsgemässen Lichtkoppelelemente nach Fig. 2 ist die Tiefe $d_{T1}$ der Einformungen $5_1$ gleich der Tiefe $d_{T2}$ der Einformungen $5_2$.

Bezüglich eines Herstellungsverfahrens für eine wie in Fig. 2 dargestellte Oberflächenstruktur kann beispielsweise vollumfänglich auf die WO 01/55760 verwiesen werden. Diese Struktur kann durch Lithographie und Ätztechniken, die bekannt sind, wie folgt hergestellt werden:

Auf die Oberfläche 3 des unstrukturierten Körpers 1 wird eine Fotolackschicht, beispielsweise ca. 120 nm des Lackes AZ1815 der Firma Clariant aufgebracht. Die erste Einformungsstruktur $5_1$ wird in die Fotolackschicht mittels Nahfeldholographie (NFH), mittels Zweistrahlholographie oder mittels Maskenbelichtung üblicher Art belichtet. Die geeignete Belichtungstechnik wird selbstverständlich entsprechend der Grösse der Gitterperioden $d_{01}$ gewählt. Für sehr kurze Gitterperioden $d_{01}$ beispielsweise von 360nm, werden bevorzugterweise holographische Belichtungsmethoden eingesetzt, insbesondere Nahfeldholographie (NFH), wie beispielsweise in WO 01/55760 beschrieben.

Nach der Belichtung wird die Körperoberfläche 3 bezüglich Belichtungsquelle um den Winkel φ (siehe Fig. 2) gedreht, und es erfolgt die Belichtung gemäss der Struktur der zweiten Einformungen $5_2$.

Nach dieser zweiten Belichtung wird der Fotolack entwickelt, und durch einen anschliessenden Ätzprozess werden die nach dem Belichtungsprozess freigelegten Oberflächenpartien entsprechend $5_1$, $5_2$ gleichzeitig weggeätzt. Danach wird der verbleibende Fotolack entfernt, z.B. mittels eines Sauerstoffplasmas.

Die in Fig. 2 dargestellte Struktur mit $d_{T1} = d_{T2}$ ergibt sich mithin durch gleichzeitiges Ätzen beider Einformungsstrukturen $5_1$, $5_2$.

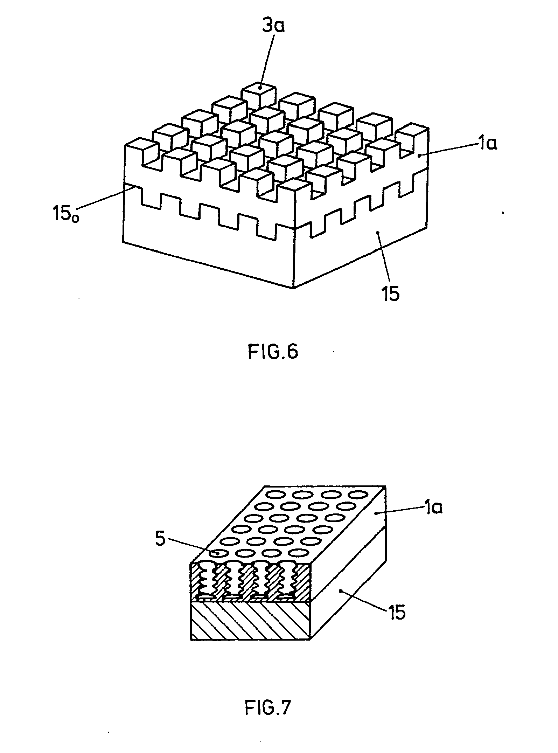

Anhand von Fig. 5 soll ein weiteres bevorzugtes erfindungsgemässes Lichtkoppelelement der in Fig. 2 dargestellten Art erläutert werden. Dabei ergibt sich eine Struktur mit drei Tiefen-Niveaus der Einformungsbereiche $5_1$, $5_2$. Hierzu wird wie folgt vorgegangen: Nach Belacken und Belichten der ersten Einformungsstruktur $5_1$ wird der Fotolack entwickelt und das erste Liniengitter mit der Tiefe $d_{T1}$ geätzt. Daraufhin wird der Körper 1 um den Winkel φ gedreht, die Oberfläche wiederum belackt, belichtet, entwickelt und die zweite Einformungsstruktur $5_2$ mit der Tiefe $d_{T2}$ geätzt. Aufgrund der Tatsache, dass bei diesem Vorgehen die beiden Einformungsstrukturen $5_1$ und $5_2$ separat geätzt werden, ergibt sich die Möglichkeit, die geätzten Tiefen $d_{T1}$ und $d_{T2}$ unterschiedlich zu wählen. In Fig. 5 ist in Aufsicht die resultierende Lichtkoppelelementstruktur dargestellt, vorerst für den allgemeinen Fall, dass die beiden Ätztiefen bzw. die Tiefen der Einformungen $d_{T1}$ und $d_{T2}$ ungleich sind. Dabei bezeichnen die nicht schraffierten Felder Strukturelemente auf dem ursprünglichen Niveau der nicht strukturierten Oberfläche also Ausformungsinseln 7 gemäss Fig. 2. Die einfach schraffierten Strukturbereiche haben die jeweils eingetragenen Tiefen, also entweder $d_{T2}$ oder $d_{T1}$. Bei den doppelt schraffierten Strukturbereichen addieren sich die Tiefen $d_{T1}$ und $d_{T2}$. Es ergibt sich mithin eine Oberflächenstruktur mit drei Strukturtiefen-Niveaus $d_{T1}$, $d_{T2}$, $d_{T1} + d_{T2}$. Wird dabei durch entsprechende Bemessung beispielsweise der Ätzzeiten gewählt $d_{T1} = d_{T2}$, so reduziert sich die Niveauzahl von 3 auf 2, nämlich auf die Tiefen $d_{T1} = d_{T2}$ und $2d_{T1} = 2d_{T2}$.

Es ist ohne weiteres ersichtlich, dass das Lichtkoppelelement in den Varianten nach Fig. 5 eine weiter ganz massgeblich vergrösserte spezifische Oberfläche aufweist, womit der oben erläuterte Effekt bezüglich Tropfenlokalisation noch verstärkt ausgenützt wird.

Betrachten wir nun das anhand von Fig. 3 dargestellte erfindungsgemässe Lichtkoppelelement, so ist ersichtlich, dass dort die Einformungsinseln 5 mit einer entsprechenden Photolack- und Ätztechnik praktisch als Sacklöcher geätzt werden können und dass auch dort ggf. Einformungen 5 auf unterschiedlichen Niveaus ihrer Tiefe realisiert werden können.

Zudem ist es bei der Ausführungsform gemäss Fig. 3 durchaus möglich, auch die linienförmigen Ausformungen $7_1$ bzw. $7_2$ mit Tiefenstufen zu realisieren, falls das erwünscht ist.

Während bei der Ausführungsform gemäss Fig. 2 die verbleibenden Ausformungsinseln 7 bevorzugterweise und insbesondere fertigungsbedingt in Aufsicht rhomboidförmig, rombusförmig, rechteckig oder quadratisch sein können, können aufgrund der unterschiedlichen Fertigungstechniken die Einformungsinseln 5 bei der Ausführungsform gemäss Fig. 3 im Grunde genommen in Aufsicht beliebig geformt sein, hinzukommend zu den im Zusammenhang mit Fig. 2 erläuterten Formen also insbesondere auch kreisförmig oder elliptisch sein.

Anhand der Fig. 2 bis 5 wurde ein erfindungsgemässes Lichtkoppelelement dargestellt, bei welchem lediglich die Oberfläche eines Körpers 1 strukturiert ist. Dabei kann der die Oberfläche 3 definierende Körper bevorzugterweise eine auf einen Träger aufgebrachte Schicht sein, wie insbesondere eine wellenleitende Schicht, beispielsweise aus $Ta_2O_5$. Es ist nochmals zu betonen, dass auch bei unterschiedlichen Gitterperioden $d_{01}$, $d_{02}$ und/oder Duty Cyclen diese Unterschiedlichkeit nicht zur Berücksichtigung von zwei Lichtwellenlängen vorgesehen ist, sondern, um - wie anhand von Fig. 1 und 2 erläutert wurde - auch bei Schiefwinkligkeit der - φ ≠ 90˚ - erfindungsgemäss vorgesehenen Strukturen auf die Komponenten von Lichtvektorgrössen, wie insbesondere auf die Polarisation, jeweils gezielt einzuwirken.

Daraus ist nun ersichtlich, dass in einer weitaus bevorzugten Ausführungsform gewählt wird:

φ = 90˚ und gleichzeitig:

$d_{o1} = d_{02}$,

$d_{51} = d_{52}$ bzw. $d_{71} = d_{72}$.

**EP 1 435 009 B1**

Dadurch wird auch das Fertigungsverfahren, insbesondere für die Form nach Fig. 2, massgeblich vereinfacht.

Insbesondere mit Blick auf ein Lichtkoppelelement, auch für Mikrotiterplatten, es sei hierzu auf die WO 01/55760 hingewiesen, aber insbesondere zur Ausnützung evaneszenter elektromagnetischer Felder für die Erfassung von mittels Fluoreszenzmarkern versehenen Substanzen, wird der bis anhin erläuterte Körper 1 durch eine Schicht hochbrechenden, für Laserlicht der gegebenen Wellenlänge transparentes Material realisiert, beispielsweise aus einem Metalloxid, wie aus $Ta_2O_5$, $TiO_2$, $Nb_2O_5$, $ZrO_2$, $ZnO_2$, $HfO_2$, dabei bevorzugt mit einer Dicke von 150 nm. Die Schicht wird dabei auf einem Träger z.B. aus Schott Desag AF45-Glas abgelegt, mit einer Schichtdicke d von beispielsweise 0,7 mm.

Die vorbeschriebenen Strukturierungsverfahren werden nun nicht an der Oberfläche der Schicht 1 vorgenommen, sondern es werden die anhand der Fig. 2 bis 5 dargestellte Strukturen an der Oberfläche des Trägers eingearbeitet. Danach wird die Oberfläche des Trägers mit der Schicht 1 beschichtet, und es bildet sich die auf der Oberfläche des Trägers aufgebrachte, erfindungsgemässe Struktur an die Oberfläche 3 der abgelegten Schicht 1 ab. Es resultiert bei einer Struktur nach Fig. 2, mit $\varphi = 90°$, $d_{T1} = d_{T2}$ und gleichzeitigem Ätzen der Einformungen das anhand von Fig. 6 dargestellte Lichtkoppelelement mit Träger 15 gemäss Ausführungsform von Fig. 2 strukturierter Trägeroberfläche $15_o$, der darauf aufgebrachten Schichten 1a mit strukturierter Oberfläche 3a.

Das Material der Schicht 1a hat dabei einen grösseren Brechungsindex als das Material des Trägers 15, was bei Glas und einem der erwähnten Schichtmaterialien, wie insbesondere $Ta_2O_5$ erfüllt ist.

In Fig. 7 ist auf einem Träger 15 in die Schicht 1a eine Struktur gemäss der Ausführungsform von Fig. 3 eingearbeitet, mit kreisförmigen Einformungsinseln 5.

Mit dem erfindungsgemässen Lichtkoppelelement in all den dargestellten Ausführungsformen wird ein Element bereitgestellt, welches auf vektorielle Lichtgrössen wirkt, im wesentlichen unabhängig von der Vektorrichtung. Zusätzlich wird der Vorteil erwirkt, dass sich bei Beaufschlagung der erfindungsgemäss strukturierten Oberfläche mit Flüssigkeitstropfen, aufgrund der spezifischen Oberflächenvergrösserung, eine Konzentration der Flüssigkeitstropfen auf klar definierte Bereiche ergibt, was eine dichte Beaufschlagung des Lichtkoppelelementes mit Flüssigproben ermöglicht. Das erfindungsgemässe Lichtkoppelement kann für alle bekannten optischen Analysemethoden, insbesondere auch unter Ausnützung des evaneszenten Feldes, zur Untersuchung Fluoreszenz-markierter Substanzen ausgenützt werden, aber auch zum Ein- und Auskoppeln von Licht, insbesondere Laserlicht, aus bzw. in wellenleitende Schichten, sei dies wiederum unter dem Aspekt der optischen Analysetechnik oder im Rahmen der Nachrichtentechnik.

**Patentansprüche**

1.  Lichtkoppelelement mit einer Oberfläche (3) aus einem Material, welches für Licht einer gegebenen Wellenlänge ($\lambda$) transparent ist und die Oberfläche eines Schichtsystems (1a) mit mindestens einer Schicht ist, welches auf einem Träger (15) aufgebracht ist und dass das Material des Trägers (15) einen Brechungsindex für das Licht der gegebenen Wellenlänge ($\lambda$) hat, der tiefer ist als der Brechungsindex eines Schichtmaterials des Schichtsystems (1a), wobei in mindestens einem Bereich der Oberfläche (3) äquidistant parallele, linienförmige Einformungen ($5_1$) und/oder Ausformungen ($7_1$) vorhanden sind, wobei an der Oberfläche (3) weitere äquidistant parallele, linienförmige Einformungen ($5_2$) und/oder Ausformungen ($7_2$) vorhanden sind, welche die ersterwähnten Einformungen ($5_1$) resp. Ausformungen ($7_1$) kreuzen ($\varphi$), wobei die vorhandenen linienförmigen Einformungen ($5_1$, $5_2$) und/oder Ausformungen ($7_1$, $7_2$) linear sind und die Abstände ($d_o$) der vorhandenen, sich folgenden, äquidistant parallelen, linienförmigen Einformungen ($5_1$, $5_2$) und/oder Ausformungen ($7_1$, $7_2$) gleich sind und bezogen auf die gegebene Wellenlänge $\lambda$ an Luft wie folgt gewählt sind:

$$0,1\ \lambda\ \leq\ d_0\ \leq\ 10\ \lambda.$$

2.  Lichtkoppelelement nach Anspruch 1, **dadurch gekennzeichnet, dass** die zwischen den Ausformungen (7, $7_1$, $7_2$) angeordneten Einformungen ($5_1$, $5_2$, 5) mit drei Tiefen-Niveaus ($d_{T1}$, $d_{T2}$, $d_{T1} + d_{T2}$) ausgebildet sind.

3.  Lichtkoppelelement nach einem der Ansprüche 1 oder 2, **dadurch gekennzeichnet, dass** die Ausformungen (7, $7_1$, $7_2$) und/oder Einformungen (5, $5_1$, $5_2$) im Wesentlichen gleich tief sind.

4.  Lichtkoppelelement nach einem der Ansprüche 1 bis 3, **dadurch gekennzeichnet, dass** sich die äquidistant parallelen, linienförmigen Einformungen ($5_1$, $5_2$) bzw. Ausformungen ($7_1$, $7_2$) rechtwinklig kreuzen.

5.  Lichtkoppelelement nach einem der Ansprüche 1 bis 4, **dadurch gekennzeichnet, dass** die Abstände ($d_o$) sich folgender äquidistant paralleler, linienförmiger Einformungen ($5_1$, $5_2$) bzw. äquidistant paralleler, linienförmiger Aus-

9

formungen ($7_1$, $7_2$) wie folgt gewählt sind:

$$200 \text{ nm} \leq d_o \leq 20000 \text{ nm,}$$

bevorzugterweise

$$40 \text{ nm} \leq d_o \leq 4000 \text{ nm,}$$

insbesondere

$$100 \text{ nm} \leq d_o \leq 1200 \text{ nm.}$$

**6.** Lichtkoppelelement nach einem der Ansprüche 1 bis 5, **dadurch gekennzeichnet, dass** die Abstände ($d_0$) sich folgender äquidistant paralleler, linienförmiger Einformungen ($5_1$, $5_2$) bzw. äquidistant paralleler, linienförmiger Ausformungen ($7_1$, $7_2$), bezogen auf die gegebene Wellenlänge $\lambda$ an Luft wie folgt gewählt sind:

$$0,2 \; \lambda \leq d_0 \leq 2 \; \lambda,$$

insbesondere bevorzugt

$$0,5 \; \lambda \leq d_0 \leq 0,6 \; \lambda.$$

**7.** Lichtkoppelelement nach einem der Ansprüche 1 bis 6, **dadurch gekennzeichnet, dass** die Tiefe $d_T$ der vorgesehenen Einformungen 0,2 nm bis 20000 nm beträgt, bevorzugt 10 nm bis 400 nm.

**8.** Lichtkoppelelement nach einem der Ansprüche 1 bis 7, **dadurch gekennzeichnet, dass** die Tiefe $d_T$ der vorgesehenen Einformungen bezogen auf die gegebene Wellenlänge $\lambda$ an Luft wie folgt gewählt wird:

$$0,001 \; \lambda \leq d_T \leq 10 \; \lambda,$$

bevorzugt

$$0,01 \; \lambda \leq d_T \leq \lambda,$$

insbesondere bevorzugt

$$0,05 \; \lambda \leq d_T \leq 0,2 \; \lambda.$$

**9.** Lichtkoppelelement nach einem der Ansprüche 1 bis 8, **dadurch gekennzeichnet, dass** der Duty Cycle, definiert als Verhältnis von Ausformungsbreite zu Abstand sich folgender linienförmiger Einformungen bzw. Ausformungen zu 0,2 bis 0,8 gewählt ist, insbesondere bevorzugt zu 0,4 bis 0,6.

**10.** Lichtkoppelelement nach einem der Ansprüche 1 bis 9, **dadurch gekennzeichnet, dass** das Schichtsystem mindestens eine Schicht aus einem hochbrechenden Material, vorzugsweise aus mindestens einem der folgenden Materialien hat:

$$Ta_2O_5, TaO_2, NbO_5, ZrO_2, ZnO, HfO_2.$$

**11.** Lichtkoppelelement nach einem der Ansprüche 1 bis 10, **dadurch gekennzeichnet, dass** das Schichtsystem eine Dicke $d_s$ hat von
2 nm bis 20000 nm,
bevorzugt von
20 nm bis 4000 nm,
insbesondere von
40 nm bis 600 nm,
bevorzugterweise von
$d_s$ = 150 nm.

**12.** Lichtkoppelelement nach einem der Ansprüche 1 bis 11, **dadurch gekennzeichnet, dass** das Schichtsystem bezogen auf die gegebene Wellenlänge $\lambda$ an Luft eine Dicke $d_s$ hat, für die, bezogen auf die gegebene Wellenlänge $\lambda$, an Luft gilt:

$$0{,}01\ \lambda\ \leq\ d_s\ \leq\ 10\ \lambda,$$

bevorzugt

$$0{,}01\ \lambda\ \leq\ d_s\ \leq\ 2\ \lambda,$$

insbesondere bevorzugt

$$0{,}2\ \lambda\ \leq\ d_s\ \leq\ 0{,}3\ \lambda.$$

**13.** Lichtkoppelelement nach einem der Ansprüche 1 bis 12, **dadurch gekennzeichnet, dass** die zwischen den äquidistant parallelen, linienförmigen Einformungen ($5_1$, $5_2$) verbleibenden Ausformungen (7) oder die zwischen den äquidistant parallelen, linienförmigen Ausformungen ($7_1$, $7_2$) verbleibenden Einformungen (5) in Aufsicht rhomboidförmig, rombusförmig, rechteckförmig oder quadratisch sind.

**14.** Lichtkoppelelement nach einem der Ansprüche 1 bis 13, **dadurch gekennzeichnet, dass** die zwischen den parallelen, linienförmigen Ausformungen ($7_1$, $7_2$) vorhandenen Einformungen (5) in Aufsicht kreisförmig oder elliptisch sind.

**15.** Verwendung des Lichtkoppelelementes nach einem der Ansprüche 1 bis 14 an einer optischen Analyseplattform für Substanzenanalyse.

**16.** Verwendung des Lichtkoppelelementes nach einem der Ansprüche 1 bis 14 für nachrichtentechnische Datenübertragung.

**17.** Verfahren zur Realisation von Polarisationsunabhängigkeit mit einem Lichtkoppelelement nach einem der Ansprüche 1 bis 14.

**18.** Verfahren zur Reduktion der Tropfengrösse auf einem Lichtkoppelelement nach einem der Ansprüche 1 bis 14.

**Claims**

1. Optocoupling element with a surface (3) of a material that is transparent to light of a given wavelength ($\lambda$) and is the surface of a layer system (1a) with at least one layer which is applied to a carrier (15), and that the material of the carrier (15) has a refractive index for the light of the given wavelength ($\lambda$) that is lower than the refractive index of a layer material of the layer system (1a), where at least one region of the surface (3) comprises equidistant parallel longitudinal recesses ($5_1$) and/or protrusions ($7_1$), where on the surface (3) are further equidistant parallel longitudinal recesses ($5_2$) and/or protrusions ($7_2$) which cross ($\varphi$) the first said recesses ($5_1$) or protrusions ($7_1$), wherein the present longitudinal recesses ($5_1$, $5_2$) and/or protrusions ($7_1$, $7_2$) are linear and the distances ($d_0$) between the present successive equidistant parallel longitudinal recesses ($5_1$, $5_2$) and/or protrusions ($7_1$, $7_2$) are equal and in relation to the given wavelength ($\lambda$) in air are selected as follows:

$$0.1\ \lambda \leq d_0 \leq 10\ \lambda.$$

2. Optocoupling element according to claim 1, **characterised in that** the recesses ($5_1$, $5_2$, 5) arranged between the protrusions (7, $7_1$, $7_2$) are formed with three depth levels ($d_{T1}$, $d_{T2}$, $d_{T1} + d_{T2}$).

3. Optocoupling element according to one of claims 1 or 2, **characterised in that** the protrusions (7, $7_1$, $7_2$) and/or recesses (5, $5_1$, $5_2$,) have substantially the same depth.

4. Optocoupling element according to any of claims 1 to 3, **characterised in that** the equidistant parallel longitudinal recesses ($5_1$, $5_2$) and protrusions ($7_1$, $7_2$) cross at right angles.

5. Optocoupling element according to any of claims 1 to 4, **characterised in that** the distances ($d_0$) between successive equidistant parallel longitudinal recesses ($5_1$, $5_2$) or equidistant parallel longitudinal protrusions ($7_1$, $7_2$) are selected as follows:

$$200\ \text{nm} \leq d_0 \leq 20000\ \text{nm},$$

preferably

$$40\ \text{nm} \leq d_0 \leq 4000\ \text{nm},$$

in particular

$$100\ \text{nm} \leq d_0 \leq 1200\ \text{nm}.$$

6. Optocoupling element according to any of claims 1 to 5, **characterised in that** the distances ($d_0$) between successive equidistant parallel longitudinal recesses ($5_1$, $5_2$) or equidistant parallel longitudinal protrusions ($7_1$, $7_2$) in relation to the given wavelength ($\lambda$) in air are selected as follows:

$$0.2\ \lambda \leq d_0 \leq 2\ \lambda$$

in particular preferably

$$0.5\ \lambda \leq d_0 \leq 0.6\ \lambda.$$

7. Optocoupling element according to any of claims 1 to 6, **characterised in that** the depth $d_T$ of the present recesses amounts to 0.2 nm to 20000 nm, preferably 10 nm to 400 nm.

8. Optocoupling element according to any of claims 1 to 7, **characterised in that** the depth $d_T$ of the present recesses in relation to the given wavelength $\lambda$ in air is selected as follows:

$$0.001\,\lambda \le d_T \le 10\,\lambda,$$

preferably

$$0.01\,\lambda \le d_T \le \lambda,$$

in particular preferably

$$0.05\,\lambda \le d_T \le 0.2\,\lambda.$$

9. Optocoupling element according to any of claims 1 to 8, **characterised in that** the duty cycle, defined as the ratio of protrusion width to the distance between successive longitudinal recesses or protrusions, is selected as 0.2 to 0.8, particularly preferably 0.4 to 0.6.

10. Optocoupling element according to any of claims 1 to 9, **characterised in that** the layer system comprises at least one layer of a high refractive material, preferably at least one of the following materials:

$Ta_2O_5$, $TaO_2$, $NbO_5$, $ZrO_2$, ZnO, $HfO_2$.

11. Optocoupling element according to any of claims 1 to 10, **characterised in that** the layer system has a thickness $d_s$ of
2 nm to 20000 nm,
preferably
20 nm to 4000 nm,
in particular of
40 nm to 600 nm,
preferably of
$d_s$ = 150 nm.

12. Optocoupling element according to any of claims 1 to 11, **characterised in that** the layer system in relation to the given wavelength $\lambda$ in air has a thickness $d_s$ for which, in relation to the given wavelength $\lambda$ in air:

$$0.01\,\lambda \le d_s \le 10\,\lambda,$$

preferably

$$0.01\,\lambda \le d_s \le 2\,\lambda,$$

particularly preferably

$$0.2\,\lambda \le d_s \le 0.3\,\lambda.$$

13. Optocoupling element according to any of claims 1 to 12, **characterised in that** the protrusions (7) remaining

between the equidistant parallel longitudinal recesses ($5_1$, $5_2$) or the recesses (5) remaining between the equidistant parallel longitudinal protrusions ($7_1$, $7_2$) in top view have the shape of a rhomboid, rhombus, rectangle or square.

14. Optocoupling element according to any of claims 1 to 13, **characterised in that** the recesses (5) present between parallel longitudinal protrusions ($7_1$, $7_2$) in top view are circular or elliptical.

15. Use of a optocoupling element according to any of claims 1 to 14 on an optical analysis platform for substance analysis.

16. Use of the optocoupling element according to any of claims 1 to 14, for data transmission in information technology.

17. Method for achieving polarisation independence with an optocoupling element according to any of claims 1 to 14.

18. Method for reducing droplet size on a optocoupling element according to any of claims 1 to 14.

**Revendications**

1. Elément de couplage lumineux avec une surface (3) qui est composée d'une matière transparente pour la lumière d'une longueur d'onde donnée ($\lambda$) et qui constitue la surface d'un système stratifié (1a) composé d'au moins une couche et appliqué sur un support (15), étant précisé que la matière du support (15) a un indice de réfraction pour la lumière de la longueur d'onde donnée ($\lambda$) qui est inférieur à l'indice de réfraction d'une matière de couche du système stratifié (1a), qu'il est prévu au moins dans une zone de la surface (3) des creux ($5_1$) et/ou des saillies ($7_1$) linéaires parallèles équidistants, qu'il est prévu sur la surface (3) d'autres creux ($5_2$) et/ou saillies ($7_2$) linéaires parallèles équidistants qui croisent ($\varphi$) les creux ($5_1$) et les saillies ($7_1$) mentionnés en premier, que les creux ($5_1$, $5_2$) et/ou les saillies ($7_1$, $7_2$) linéaires prévus sont rectilignes et que les écartements ($d_0$) des creux ($5_1$, $5_2$) et/ou des saillies ($7_1$, $7_2$) linéaires parallèles équidistants qui se suivent sont les mêmes et sont choisis par rapport à la longueur d'onde donnée $\lambda$, à l'air, de la manière suivante :

$$0,1 \ \lambda \ \le \ d_0 \ \le \ 10 \ \lambda.$$

2. Elément de couplage lumineux selon la revendication 1, **caractérisé en ce que** les creux ($5_1$, $5_2$, 5) disposés entre les saillies (7, $7_1$, $7_2$) sont formés avec trois niveaux de profondeur ($d_{T1}$, $d_{T2}$, $d_{T1}$+$d_{T2}$).

3. Elément de couplage lumineux selon la revendication 1 ou 2, **caractérisé en ce que** les saillies (7, $7_1$, $7_2$) et/ou les creux (5, $5_1$, $5_2$) ont sensiblement la même profondeur.

4. Elément de couplage selon l'une des revendications 1 à 3, **caractérisé en ce que** les creux ($5_1$, $5_2$) et les saillies ($7_1$, $7_2$) linéaires parallèles équidistants se croisent à angle droit.

5. Elément de couplage selon l'une des revendications 1 à 4, **caractérisé en ce que** les écartements ($d_0$) de creux ($5_1$, $5_2$) et de saillies ($7_1$, $7_2$) linéaires parallèles équidistants qui se suivent sont choisis de la manière suivante :

$$200 \ nm \ \le \ d_0 \ \le \ 20000 \ nm,$$

de préférence

$$40 \ nm \ \le \ d_0 \ \le \ 4000 \ nm,$$

en particulier

$$100 \ nm \ \le \ d_0 \ \le \ 1200 \ nm.$$

6. Elément de couplage lumineux selon l'une des revendications 1 à 5, **caractérisé en ce que** les écartements ($d_0$)

de creux ($5_1$, $5_2$) et de saillies ($7_1$, $7_2$) linéaires parallèles équidistants qui se suivent sont choisis par rapport à la longueur d'onde donnée λ, à l'air, de la manière suivante:

$$0,2 \ \lambda \ \leq \ d_0 \ \leq \ 2 \ \lambda,$$

de préférence

$$0,5 \ \lambda \ \leq \ d_0 \ \leq \ 0,6 \ \lambda.$$

**7.** Elément de couplage lumineux selon l'une des revendications 1 à 6, **caractérisé en ce que** la profondeur $d_T$ des creux prévus est de 0,2 nm à 20000 nm, de préférence de 10 nm à 400 nm.

**8.** Elément de couplage lumineux selon l'une des revendications 1 à 7, **caractérisé en ce que** la profondeur $d_T$ des creux prévus est choisie par rapport à la longueur d'onde donnée λ à l'air de la manière suivante:

$$0,001 \ \lambda \ \leq \ d_T \ \leq \ 10 \ \lambda,$$

de préférence

$$0,01 \ \lambda \ \leq \ d_T \ \leq \ \lambda,$$

et plus spécialement

$$0,05 \ \lambda \ \leq \ d_T \ \leq \ 0,2 \ \lambda.$$

**9.** Elément de couplage lumineux selon l'une des revendications 1 à 8, **caractérisé en ce que** le facteur d'utilisation, défini comme le rapport de la largeur de saillie sur l'écartement de creux ou de saillies linéaires qui se suivent, est choisi de 0,2 à 0,8, de préférence de 0,4 à 0,6.

**10.** Elément de couplage selon l'une des revendications 1 à 9, **caractérisé en ce que** le système stratifié a au moins une couche composée d'une matière à indice de réfraction élevé, de préférence de l'une des matières suivantes :

$Ta_2O_5$, $TaO_2$, $NbO_5$, $ZrO_2$, $ZnO$, $HfO_2$.

**11.** Elément de couplage lumineux selon l'une des revendications 1 à 10, **caractérisé en ce que** le système stratifié a une épaisseur $d_s$ de
2 nm à 20000 nm,
de préférence de
20 nm à 4000 nm,
en particulier de
40 nm à 600 nm,
plus spécialement de
$d_s$ = 150 nm.

**12.** Elément de couplage lumineux selon l'une des revendications 1 à 11, **caractérisé en ce que** le système stratifié présente par rapport à la longueur d'onde donnée λ à l'air une épaisseur $d_s$ pour laquelle on a, par rapport à la longueur d'onde donnée λ à l'air :

$$0,01 \ \lambda \ \leq \ d_s \ \leq \ 10 \ \lambda,$$

de préférence

$$0,01 \; \lambda \; \leq \; d_S \; \leq \; 2 \; \lambda,$$

plus spécialement

$$0,2 \; \lambda \; \leq \; d_S \; \leq \; 0,3 \; \lambda.$$

**13.** Elément de couplage lumineux selon l'une des revendications 1 à 12, **caractérisé en ce que** les saillies (7) restant entre les creux (5$_1$, 5$_2$) linéaires parallèles équidistants ou les creux (5) restant entre les saillies (7$_1$, 7$_2$) linéaires parallèles équidistantes ont une forme rhomboïdale, une forme de losange, une forme rectangulaire ou une forme carrée, vus de dessus.

**14.** Elément de couplage lumineux selon l'une des revendications 1 à 13, **caractérisé en ce que** les creux (5) prévus entre les saillies (7$_1$, 7$_2$) linéaires parallèles ont une forme circulaire ou elliptique, vus de dessus.

**15.** Utilisation de l'élément de couplage lumineux selon l'une des revendications 1 à 14 sur une plate-forme d'analyse optique pour l'analyse de substances.

**16.** Utilisation de l'élément de couplage lumineux selon l'une des revendications 1 à 14 pour la transmission de données à l'aide d'une technique de communications.

**17.** Procédé pour obtenir une indépendance de la polarisation avec un élément de couplage lumineux selon l'une des revendications 1 à 14.

**18.** Procédé pour réduire la taille de gouttes sur un élément de couplage lumineux selon l'une des revendications 1 à 14.

EP 1 435 009 B1

FIG.1

FIG.2

17

FIG.3

FIG.4

FIG.5

$d_{T2} + d_{T1}$

$d_{T2} < d_{T1}$

3a

15o

1a

15

FIG.6

5

1a

15

FIG.7